# EUROPÄISCHE PATENTSCHRIFT

(11) **EP 1 806 043 B1**
(45) Veröffentlichungstag und Bekanntmachung des Hinweises auf die Patenterteilung: **19.05.2010**
(21) Anmeldenummer: 05796489.2
(22) Anmeldetag: 30.09.2005
(51) Int. Cl.: H05K 13/02, H05K 13/04

(54) **VORRICHTUNG ZUR OPTISCHEN PRÜFUNG VON ELEKTRONISCHEN BAUTEILEN**
DEVICE FOR OPTICALLY VERIFYING ELECTRONIC COMPONENTS
PROCEDE DE VERIFICATION OPTIQUE DE COMPOSANTS ELECTRONIQUES

(30) Priorität: 20.10.2004 DE 102004051301
(43) Veröffentlichungstag der Anmeldung: 11.07.2007
(73) Patentinhaber: IEF Werner GmbH, 78120 Furtwangen (DE)
(72) Erfinder: BÄR, Manfred, 78147 Vöhrenbach (DE)
(74) Vertreter: Patentanwälte Westphal, Mussgnug & Partner
(86) Internationale Anmeldenummer: PCT/EP2005/010585
(87) Internationale Veröffentlichungsnummer: WO 2006/042633

(56) Entgegenhaltungen:
- WO-A-02/054478
- PATENT ABSTRACTS OF JAPAN Bd. 2000, Nr. 01, 31. Januar 2000 (2000-01-31) & JP 11 295236 A (NITTO KOGYO CO LTD), 29. Oktober 1999 (1999-10-29)
- PATENT ABSTRACTS OF JAPAN Bd. 2003, Nr. 12, 5. Dezember 2003 (2003-12-05) & JP 2003 237929 A (MURATA MFG CO LTD), 27. August 2003 (2003-08-27)
- PATENT ABSTRACTS OF JAPAN Bd. 1996, Nr. 07, 31. Juli 1996 (1996-07-31) & JP 08 075667 A (MITSUBISHI MATERIALS CORP), 22. März 1996 (1996-03-22)

## Beschreibung

Die Erfindung betrifft eine Vorrichtung zur optischen Überprüfung von elektronischen Bauteilen, insbesondere von Halbleiterbauelementen, der im Oberbegriff des Patentanspruchs 1 angegebenen Art.

Solche elektronischen Bauteile sind beispielsweise DIPs (dual inline package), welche aus schmalen Quaderelementen mit abstehenden Kontaktfüßen bestehen, oder SMDs (service mounted device), die keine abstehenden Kontakte besitzen.

Mit der optischen Prüfung werden auf der Ober- und Unterseite angebrachte Beschriftungen, die Gehäusequalität und gegebenenfalls die Ausrichtung und Geradheit der seitlich abstehenden Kontaktfüße kontrolliert.

Für diese Kontrolle sind ein oder mehrere Kameras sowie Greifer und Umsetzvorrichtungen zum Halten und Umsetzen der Bauteile notwendig, um die zu prüfenden Bauteile von allen Seiten zu betrachten. Die von den Bauteilen mit der Kamera erzeugten Bilder werden mittels bildverarbeitender Rechner geprüft.

Ein mehrmaliges Umsetzen der Bauteile ist notwendig, da zwangsläufig die zu kontrollierende Fläche der Bauteile von den Greifern teilweise verdeckt sind.

Dieses Umsetzen bzw. Umgreifen erfordert recht aufwändige Handhabungseinrichtungen, welche störungsanfällig sind, da jeder Umsetz- oder Umgreifvorgang Risiken birgt und außerdem zu Messfehlern führen kann. Außerdem erfordert das Umsetzen und Umgreifen zusätzliche Bearbeitungszeit, welche durch aufwändige parallele Bearbeitung ausgeglichen werden muss.

Mit der vorliegenden Erfindung soll eine einfach aufgebaute Vorrichtung geschaffen werden, welche die gleichzeitige Betrachtung der zu prüfenden Bauteile von möglichst vielen Seiten ohne aufwändige Umsetz- und Umgreifvorgänge ermöglicht.

Eine solche Vorrichtung ist an sich aus WO 02/054478 A1 bekannt. Sie weist wenigstens zwei Trommeln mit radial an ihrem Umfang in Winkelabständen angeordneten Aufnahmen auf, in welche die Bauteile einsetzbar sind. Die Trommeln sind hierbei derart angeordnet, dass ihre Umfangsflächen in einem Übergabebereich eng benachbart sind, sodass in diesem Bereich jeweils ein Bauteil aus der Bauteilaufnahme der einen Trommel in die Bauteilaufnahme der anderen Trommel überführbar ist. Zur optischen Erfassung der Bauteile ist jeder Trommel wenigstens eine Kamera zugeordnet, deren Objektiv auf die zu prüfende Seite des Bauteils gerichtet ist. Die von den Kameras ermittelten Daten werden einem bildverarbeitenden Rechner zugeführt.

Der vorliegenden Erfindung liegt die Aufgabe zugrunde, diese Vorrichtung so zu gestalten, dass mit möglichst geringem Aufwand im Bereich der Trommel weitere Messaufgaben durchgeführt werden können.

Zur Lösung dieser Aufgabe ist mit Anspruch 1 eine im Oberbegriff definierte Vorrichtung vorgeschlagen, bei welcher in Förderrichtung der Bauteile eine dritte umlaufende Trommel mit über den Umfang in gleichen Winkelabständen verteilten Bauteilaufnahmen vorgesehen ist und bei welcher die Achsen zweier benachbarter Trommeln jeweils senkrecht zueinander stehen.

Bei einer derartigen Konfiguration müssen die Aufnahmen so gestaltet sein, dass die in diesen befindlichen Bauteile bei umlaufenden Trommeln kontinuierlich oder schrittweise, also ohne Unterbrechung, übergeben werden.

Gemäss Anspruch 2 weisen die Trommeln seitlich offene Aufnahmen auf, die so bemessen sind, dass die Bauteile die Umfangsfläche der Trommeln teilweise überragen, wobei bei der Bauteilübergabe das Bauteil zum einen Teil in der Aufnahme der einen Trommel und zum anderen Teil in der Aufnahme der anderen Trommel kurzzeitig gelegen ist.

Die in den Aufnahmen gelegenen Bauteile können hierbei, wie mit Anspruch 8 vorgeschlagen, durch Unterdruck gehalten werden. Diese Übergabevorrichtung eignet sich vor allem für Bauteile ohne Kontakte.

Sind dagegen Bauteile mit seitlich abstehenden Kontakten zu übergeben, ist die mit Anspruch 3 vorgeschlagene Vorrichtung besser geeignet. Bei dieser sind die Aufnahmen der Trommeln so bemessen, dass die Bauteile ganz innerhalb der Aufnahmen gelegen sind. Zur Übergabe werden die innerhalb der Aufnahmen gelegene Bauteile mittels eines der Aufnahme zugeordneten radialen Schiebers aus der Aufnahme in die entsprechende Aufnahme der benachbarten Trommel geschoben.

Bei einer erfindungsgemäß mit drei Trommeln ausgestatteten Vorrichtung kann mit der ersten z. B. zunächst eine Qualitäts- oder Lageprüfung der Bauteile vorgenommen werden, wie mit Anspruch 4 vorgeschlagen. Die schlechten Bauteile können nach Durchführung der Prüfung von vornherein mittels einer Weiche oder dergleichen ausgeschieden werden.

Mit der dritten Trommel kann die Unterseite der Bauteile, die in der ersten Aufnahme verdeckt ist, nach Umsetzen der Bauteile mit einer Kameraanordnung, wie sie insbesondere mit den Ansprüchen 5 oder 6 angegeben ist, geprüft werden. In diesem Fall ist jedoch zur Bauteilprüfung auch die Anordnung von Kameras möglich, deren Aufnahmerichtungen radial oder schräg zum Trommelumfang verlaufen.

Nach dem Vorschlag gemäß Anspruch 6 kann anstelle der zweiten Kamera ein Umlenkspiegel der Kamera gegenüberliegend vorgesehen sein, über den die Kamera auch die rückwärtige Seite des Bauteils erfassen und prüfen kann.

Um eine möglichst kurze Durchlaufzeit der Bauteile zu ermöglichen, um also die Trommeln möglichst rasch umlaufen zu lassen, ist gemäss Anspruch 7 vorgeschlagen, die Bauteile innerhalb der Aufnahmen so zu lagern, dass sie an wenigstens einer Aufnahmewand entgegen der Umlaufrichtung der Trommel anliegen.

Wie bereits oben erwähnt können aber Bauteile, die in der Aufnahme nicht mechanisch festgelegt werden können, z. B. Bauteile ohne Kontaktfüße, nach dem Vorschlag gemäss Anspruch 8 durch Unterdruck gehalten werden.

Die mit der Erfindung vorgeschlagene Vorrichtung ermöglicht gemäss Anspruch 9 außerdem eine einfache Beschickung mit Bauteilen mittels eines in Tangentialrichtung verlaufenden Zuführschachtes. Ebenso einfach gestaltet sich der Auswurf der geprüften Bauteile in Form von zwei oder mehreren winklig und/oder versetzt zueinander angeordneten Abführschächten, welche alternativ dem Auswurf unterschiedlich qualifizierter Bauteile dienen.

Der Gegenstand der Erfindung ist nachstehend anhand von Ausführungsbeispielen, die in den Zeichnungen dargestellt sind, im Einzelnen erläutert.

In den Zeichnungen zeigen
- Fig. 1: perspektivische, schematische Darstellung einer Prüfvorrichtung mit einer für die Erfindung geeigneten Trommel,
- Fig. 2: vergrößertes Detail Z aus Figur 1,
- Fig. 3: Aufsicht der Prüfvorrichtung gemäss Figur 1,
- Fig. 4: Seitenansicht der Prüfvorrichtung gemäss Figur 1,
- Fig. 5: Seitenansicht einer gleichfalls für die Erfindung geeigneten, anders gestalteten Trommel,
- Fig. 6 und Fig. 7: vergrößerte perspektivische Darstellungen der Aufnahmeschächte für die Trommel gemäss Figur 5 in zwei verschiedenen Positionen,
- Fig. 8: perspektivische Darstellung des geschlossenen Aufnahmeschachtes gemäss Figur 6 und 7,
- Figur 9: Seitenansicht der mit der Trommel gemäss Figur 5 ausgestatteten Prüfvorrichtung,
- Fig. 10: perspektivische Darstellung einer Anordnung, die gemäß der Erfindung mit drei Trommeln ausgestattet ist,
- Fig. 11: Vorderansicht der Anordnung gemäss Figur 10,
- Fig. 12: Aufsicht der Anordnung gemäss Figur 10,
- Fig. 13: vergrösserte perspektivische Ansicht des Details X in Figur 10,
- Fig. 14: Längsschnitt des Details X in Figur 10 bzw. 11,
- Fig. 15: Horizontalschnitt des Details X in Figur 10, 11, 12,
- Fig. 16: perspektivische Darstellung des Details X in Figur 10 nach einem zweiten Ausführungsbeispiel,
- Fig. 17: Darstellung entsprechend Figur 14 des zweiten Ausführungsbeispiels und
- Fig. 18: Darstellung des Details entsprechend Figur 15 des zweiten Ausführungsbeispiels.

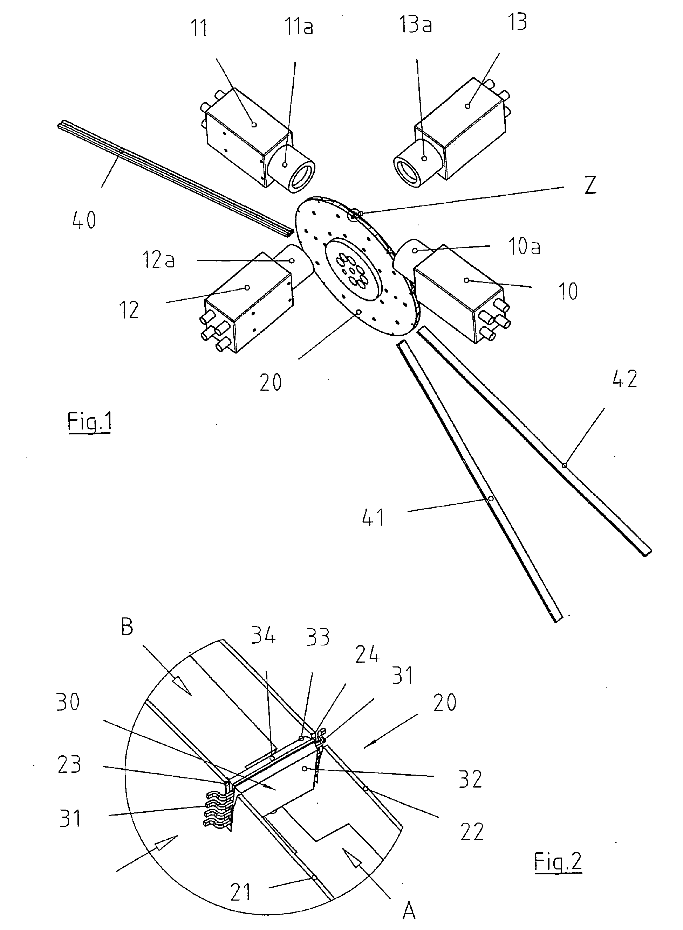

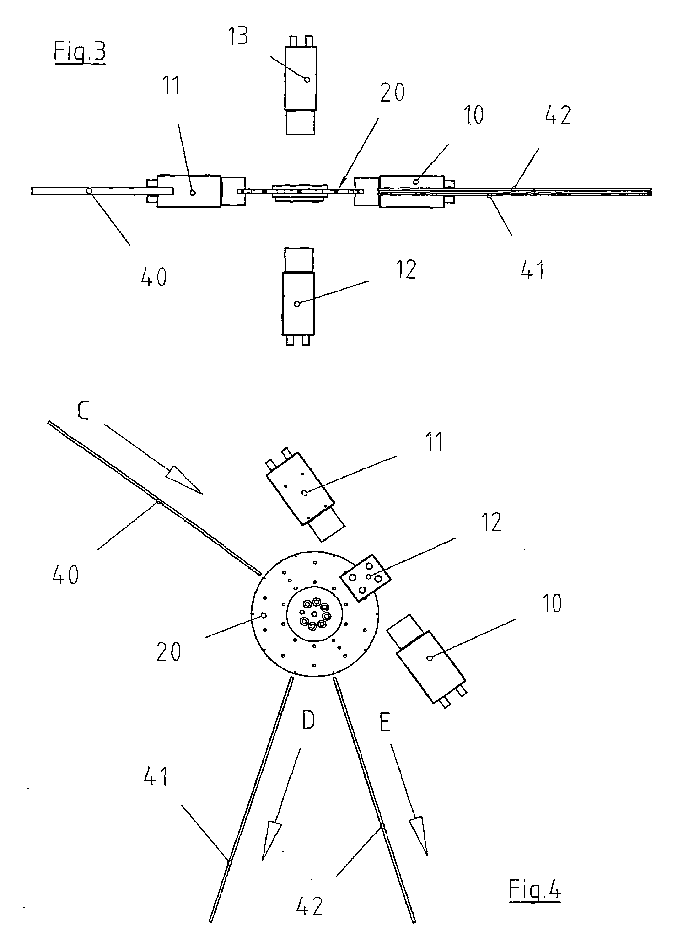

Die mit den Figuren 1 bis 4 dargestellte Prüfvorrichtung eignet sich für die Prüfung von DIPs, also von quaderförmigen Bauteilen 30 mit beidseitig abstehenden Kontaktfüßen 31, die bei Z (Figur 1) in eine umlaufende Trommel 20 eingesetzt sind.

Die Ober- und Unterseiten 32, 33 der in die Trommel 20 eingesetzten Bauteile 30 werden mittels der Kameras 10 und 11 kontrolliert, deren Objektive 10a und 11a in Richtung A bzw. B gegeneinander und damit auf die Oberflächen 32 bzw. 33 etwa tangential zum Trommelumfang gerichtet sind.

Der Kontrolle der Kontaktfüße 31 dienen die seitlich der Trommel 20 angeordneten Kameras 12 und 13, deren Objektive 12a und 13a gegeneinander und auf die Stirnseite der Kontaktfüße 31 gerichtet sind. Soweit auch die oben gelegenen Stirnseiten 34 der Bauteile 30 zu prüfen sind, ist eine oberhalb der Trommel 20 angeordnete, nicht dargestellte Kamera vorzusehen.

Damit lässt sich mit dieser Vorrichtung in einem Arbeitsgang ohne Umsetzen und Umgreifen das Bauteil 30 schnell bei geringstem Störungsrisiko und genau prüfen

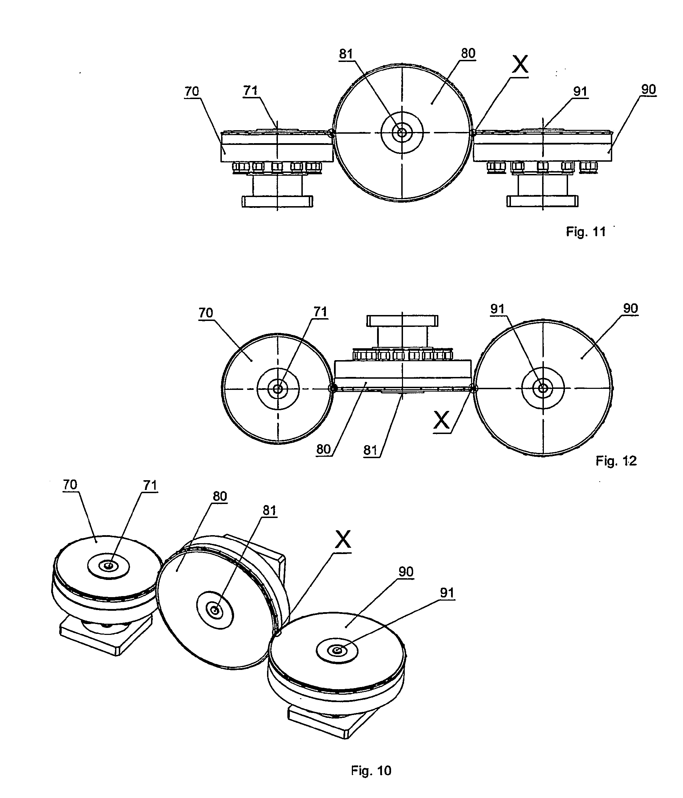

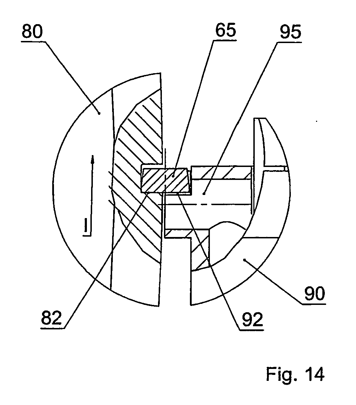

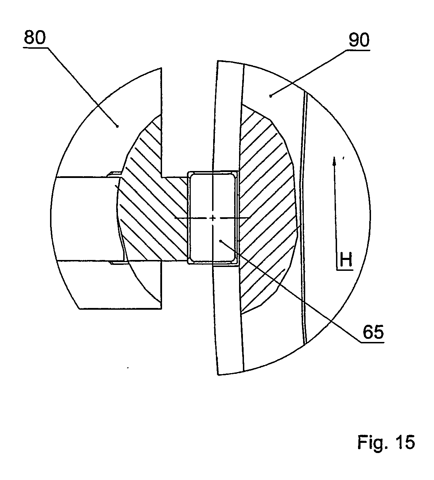

Um die untere Stirnseite der Bauteile 30 zu kontrollieren, sind diese in die zweite erfindungsgemäß ausgebildete Vorrichtung mit umlaufender Trommel, nämlich die Trommel 90 bei der Vorrichtung nach Figur 10 bis 18, einzusetzen.

Die Zufuhr der zu prüfenden Bauteile erfolgt mittels des Zuführschachtes 40, der auf der Umfangsflache der Trommel 20 mündet und in welchem diese schwerkraftbedingt in Richtung C gleiten. Die für das Bestücken der Trommel 20 notwendigen Handhabungsvorrichtungen sind bekannt und darum nicht dargestellt.

In ähnlicher Weise erfolgt der Auswurf der geprüften Bauteile mit Hilfe von nachgeordneten Abfuhrschächten 41 und 42 in Richtung D und E. Da mit dem bildverarbeitenden, nicht dargestellten Rechner die Qualitätsprüfung und Fehlerklassifizierung erfolgt, können bereits bei Ausgabe der geprüften Bauteile Gut- und Schlechtteile sortiert werden.

Bei der in der Zeichnung dargestellten Prüfvorrichtung, bei welcher die Trommel 20 um eine horizontale Achse umläuft, erfolgt die Beschickung der Schächte 41 bis 42 mit Bauteilen im Wesentlichen durch Schwerkraft, wobei die Bauteile innerhalb der Schächte bis zum Abwurf durch Unterdruck gehalten werden.

Die Vorrichtung eignet sich aber auch für eine um eine vertikale Achse umlaufende Trommel. In diesem Fall ist die Anwendung der Schwerkraft zum Vorschub und Sortieren nicht möglich. Vielmehr sind gesonderte Vorschubmittel notwendig.

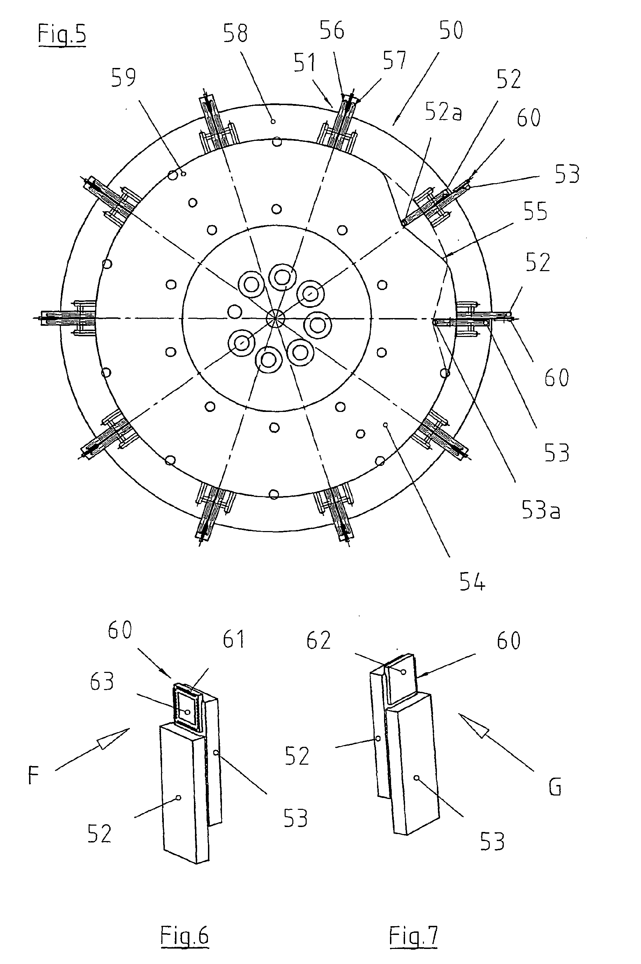

Sollen Bauteile geprüft werden, welche, wie z. B. bei SIMs, keine seitlich abstehenden Kontaktfüsse aufweisen, ist nach einem weiteren Vorschlag der Erfindung eine etwas anders gestaltete, in den Figuren 5 bis 9 dargestellte Trommel 50 notwendig. Es handelt sich hierbei um die in den Figuren 6 und 7 erkennbaren Bauteile 60, deren Anschlusskontakte 61 nicht seitlich abstehen, sondern auf der Unterseite 63 des Bauteiles 60 gelegen sind.

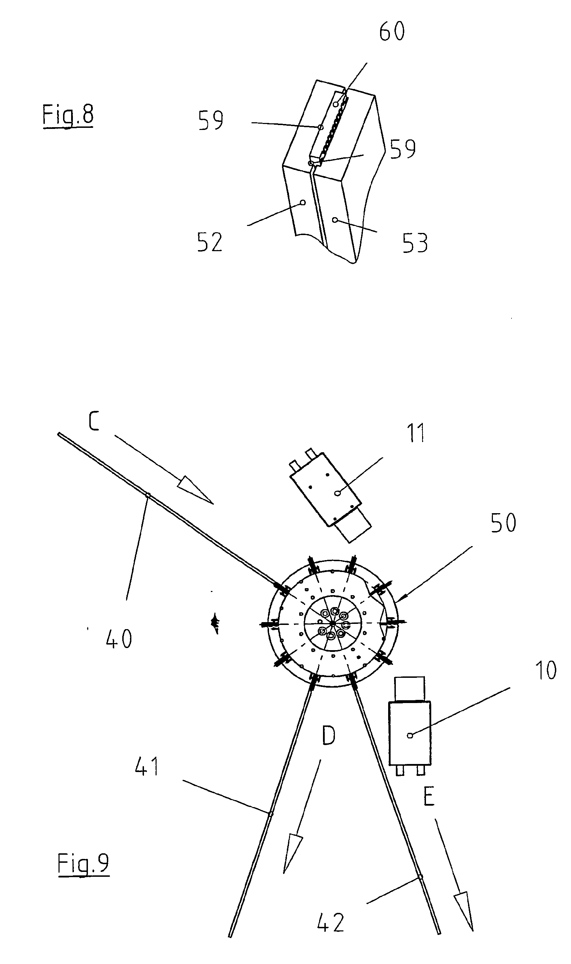

Um auch solche Bauteile in den Blickrichtungen F und G optisch prüfen zu können, sind am Umfang der Trommel 50 in Winkelabständen angeordnete, von außen mit Bauteilen beschickbare Schächte 51 vorgesehen. Diese bestehen aus radial gegeneinander verschiebbaren Schachtwänden 52 und 53, deren äußere, einander zugewandte Seiten entsprechend der Form der Bauteile 60 ausgebildete Ausnehmungen 59 aufweisen, wie dies vor allem aus Figur 8 erkennbar ist. Um wechselweise die Oberseite 62 bzw. die Unterseite 63 optisch mit den Kameras 10 und 11 kontrollieren zu können, sind die Schachtwände jeweils zurückzuziehen, wie dies mit den Figuren 6 und 7 veranschaulicht ist.

In diesen Positionen werden die Bauteile 60 mit Hilfe von Unterdruck gehalten, welcher mittels den in den Schachtwänden 52 und 53 angeordneten Luftkanälen 56 und 57, die in den Ausnehmungen 59 münden, erzeugt wird.

Die Steuerung der verschiebbaren Schachtwände 52 und 53 erfolgt automatisch bei Umlauf der Trommel 50, welche zu diesem Zweck mit Kurvenscheiben 54 verbunden ist, auf deren Steuerkurven 55 die innen gelegenen Enden der mit Steuernocken 52a und 53a ausgestatteten Schachtwände 52 und 53 kraftschlüssig aufliegen. Somit lassen sich von einem Winkelschritt zum anderen die Schachtwände in die in den Figuren 6 und 7 dargestellte Positionen verfahren.

Die Gesamtanordnung der Vorrichtung nach den Figuren 5 bis 8 ist mit Figur 9 veranschaulicht. Wiederum werden die zu prüfenden Bauteile über den Zuführschacht 40 in Vorschubrichtung C zugeführt und über die Abführschächte 41 und 42 in Vorschubrichtung D und E nach erfolgter Qualifizierung ausgeworfen.

Beide Ausführungsbeispiele gestatten eine einfache Umrüstung auf anders gestaltete bzw. dimensionierte Bauteile. In diesem Fall muss lediglich die Trommel mit entsprechend gestalteten Bauteilaufnahmen ausgetauscht werden.

Während für die Ausführungsbeispiele gemäss Figur 1 und 5 eine Trommel für die optische Überprüfung der elektronischen Bauteile ausreicht, ist für das erfindungsgemäße Ausführungsbeispiel nach den Figuren 10 bis 12 eine mit drei Trommeln 70, 80, 90 ausgestattete Vorrichtung vorgesehen.

Die mittlere Trommel 80, die in gleicher Weise wie die in den Figuren 1 bis 4 dargestellte Trommel 20 mit Kameras ausgestattet ist, dient der Überprüfung der Bauteile.

Die dieser Trommel vorgeschaltete Trommel 70 dient der Vorkontrolle der Bauteile. Beispielsweise wird mittels geeigneter Prüfmittel, z. B. einer Kamera, die richtige Position oder auch die richtige Beschriftung der Bauteile kontrolliert. Damit können in diesem Bereich festgestellte ungeeignete Bauteile von vornherein mittels einer nicht dargestellten Weichenanordnung ausgesondert werden.

Die dritte Trommel 90, in deren Aufnahmen die der Trommel 80 entnommenen Bauteile gewendet eingesetzt werden, gestattet die optische Überprüfung der Bauteilunterseiten, die durch die Aufnahmen der Trommel 80 teilweise abgedeckt sind.

Durch die Anordnung der Trommeln 70, 80, 90, deren Achsen 71, 81, 91 jeweils senkrecht zueinander stehen und die in den Übergabebereich, z. B. bei X, eng benachbart sind, ist mit einfachen Mitteln eine Bauteilübergabe möglich.

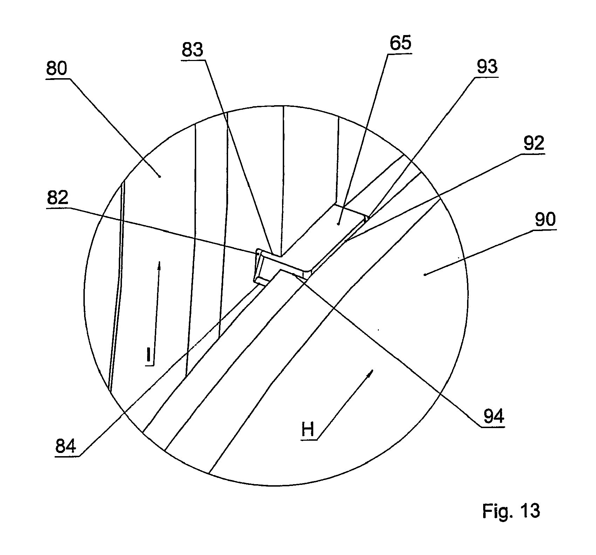

Eine erste Alternative der Übergabemöglichkeit ist anhand der Figuren 13 bis 15 erläutert. Eine identische Anordnung ist im gegenüberliegenden Übergabebereich zwischen den Trommeln 70 und 80 realisiert.

Wie die Figuren 13 bis 15 deutlich machen, stehen die beiden Trommeln 80 und 90 senkrecht zueinander, wobei ihre jeweiligen Umfangsflächen nur einen geringen Abstand voneinander haben. In den Umfangsbereich der Trommeln 80 bzw. 90 sind identisch ausgebildete, im Querschnitt rechteckförmige, taschenartige Bauteilaufnahmen 82 bzw. 92 eingearbeitet. Der Querschnitt dieser Taschen entspricht dem halben Querschnitt eines Bauteiles 65, sodass das Bauteil mit einer Hälfte die Aufnahmen 82 bzw. 92 überragt.

In den in den Figuren 13 bis 15 veranschaulichten Positionen erfasst die in Richtung des Pfeiles H umlaufende Trommel 90 das Bauteil 65 und entnimmt es somit der Aufnahme 82 der während der Übernahme kurzzeitig stillstehenden Trommel 80. Nach Entnahme des Bauteiles werden die Trommeln 80 und 90 in Richtung der Pfeile I bzw. H bis zum nächsten Bauteil weiter gedreht.

Die Bauteile 65 liegen hierbei in Umfangsrichtung beidseitig an den Wänden 83 und 84 bzw. 93 und 94 an und werden innerhalb der Aufnahmen durch mittels des Luftkanals 95 erzeugten Unterdruck gehalten. Diese Art der Übergabevorrichtung eignet sich vor allem für Bauteile ohne seitlich abstehende Kontakte. In diesem Fall entspricht der Querschnitt der Bauteilaufnahmen 82 bzw. 92 exakt der Kontur der Bauteile.

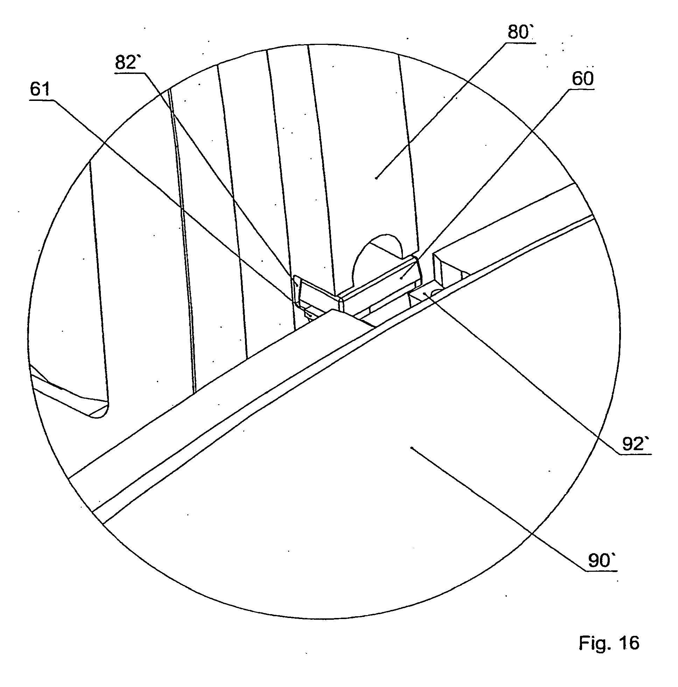

Für die Übergabe von Bauteilen 60 mit seitlich abstehenden Kontakten 61 eignet sich besser die mit den Figuren 16 bis 18 im Detail veranschaulichte Anordnung.

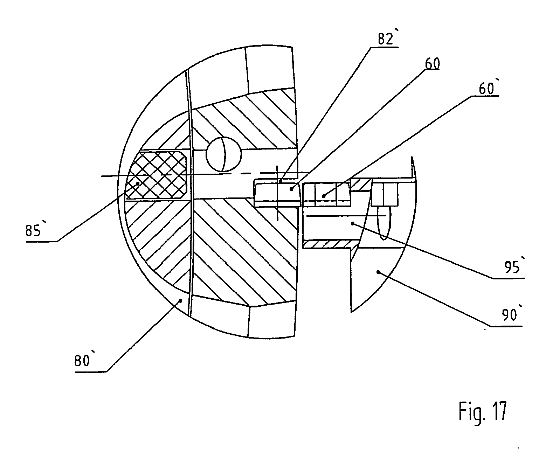

Auch bei dieser laufen die Trommeln 80' und 90' in Richtung der Pfeile I und H um. Anders als bei der mit Figuren 13 bis 15 veranschaulichten Vorrichtung liegen jedoch hier die Bauteile 60 jeweils in ihrer Gesamtheit in den Bauteilaufnahmen 82' und 92'. Der Übergabe des Bauteils 60 in der in den Figuren 16 bis 18 dargestellten Position dient ein radial ausfahrbarer Stößel oder Schieber 85', mit welchem, wie Figur 17 veranschaulicht, das Bauteil 60 in die gestrichelt gezeichnete Position 60', also in die Aufnahme 92' der Trommel 90', geschoben wird.

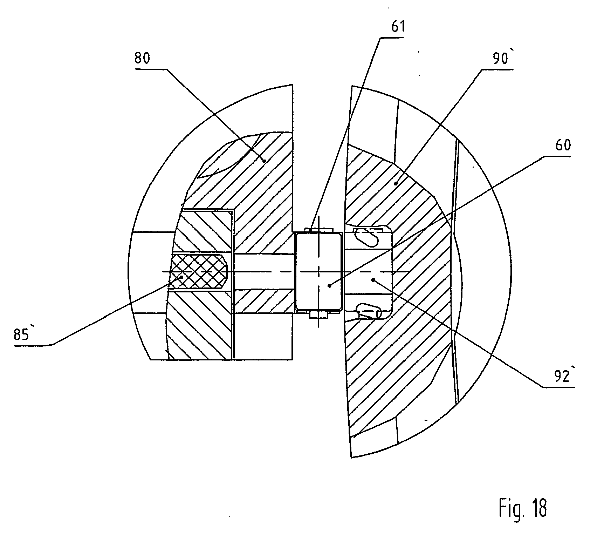

Die Taschen 92' sind, wie vor allem Figur 18 erkennen lässt, so bemessen, dass auch die seitlich abstehenden Kontakte 61 des Bauteils 60 Platz finden.

### Bezugszeichenliste

- 10: Kamera
10a Objektiv
- 11: Kamera
11a Objektiv
- 12: Kamera
12a Objektiv
- 13: Kamera
13a Objektiv

- 20: Trommel
- 21: Scheibe
- 22: Scheibe
- 23: Radialschlitz
- 24: Radialschlitz

- 30: Bauteil (DIP)
- 31: Kontaktfüße
- 32: Oberseite
- 33: Unterseite
- 34: obere Stirnseite

- 40: Zuführschacht
- 41: Abführschacht
- 42: Abführschacht

- 50: Trommel
- 51: Schacht
- 52: Schachtwand
52a Steuernocken
- 53: Schachtwand
53a Steuernocken
- 54: Kurvenscheibe
- 55: Steuerkurve
- 56: Luftkanal
- 57: Luftkanal
- 58: Scheibe
- 59: Ausnehmung
- 60, 60': Bauteil (SIM)
- 61: Kontakte
- 62: Oberseite
- 63: Unterseite

- 65: Bauteil

- 70: 1. Trommel
- 71: Trommelachse

- 80, 80': 2. Trommel
- 81: Trommelachse
- 82, 82': Bauteilaufnahmen
- 83: hintere Wand
- 84: vordere Wand
- 85': Schieber

- 90, 90': 3. Trommel
- 91: Trommelachse
- 92, 92': Bauteilaufnahmen
- 93: vordere Wand
- 94: hintere Wand
- 95: Luftkanal

## Patentansprüche

1. Vorrichtung zur optischen Prüfung von elektronischen Bauteilen, insbesondere von Halbleiterbauelementen, bestehend aus wenigstens zwei umlaufenden Trommeln mit radial an ihrem Umfang in Winkelabständen angeordneten Aufnahmen, in welche die Bauteile einsetzbar sind, wobei die Trommeln derart angeordnet sind, dass ihre Umfangsflächen in einem Übergabebereich eng benachbart sind und in diesem Bereich jeweils ein Bauteil aus der Bauteilaufnahme der einen Trommel in die Bauteilaufnahme der anderen Trommel überführbar ist, sowie aus wenigstens einer jeder Trommel zugeordneten Kamera, deren Objektiv auf die zu prüfende Seite des Bauteils gerichtet ist, und einem bildverarbeitenden Rechner,
**dadurch gekennzeichnet, dass**
in Förderrichtung der Bauteile (60, 65) eine dritte umlaufende Trommel (90) mit über den Umfang in gleichen Winkelabständen verteilten Bauteilaufnahmen (92, 92') vorgesehen ist und dass die Achsen (71, 81; 81, 91) zweier benachbarter Trommeln (70, 80; 80, 90) jeweils senkrecht zueinander stehen.

2. Vorrichtung nach Anspruch 1,
**dadurch gekennzeichnet, dass**
die Aufnahmen (82, 92) der Trommeln (80, 90) seitlich offen und so bemessen sind, dass die Bauteile (65) die Umfangsfläche der Trommeln (80, 90) teilweise überragen, wobei bei der Bauteilübergabe das Bauteil (65) zu einem Teil in der Aufnahme (82) der einen Trommel (80) und zum anderen Teil in der Aufnahme (92) der anderen Trommel (90) kurzzeitig gelegen ist.

3. Vorrichtung nach Anspruch 1,
**dadurch gekennzeichnet, dass**
die Aufnahmen (82', 92') der Trommeln (80', 90') so bemessen sind, dass die Bauteile (60) ganz innerhalb der Aufnahmen (82', 92') gelegen sind und dass jeder Aufnahme (82') ein radialer Schieber (85') zugeordnet ist, mit welchem ein Bauteil (60) aus der Aufnahme (82') in die entsprechende Aufnahme (92') der benachbarten Trommel (90) schiebbar ist.

4. Vorrichtung nach Anspruch 1, 2 oder 3,
**dadurch gekennzeichnet, dass**
der in Förderrichtung der Bauteile ersten Trommel (70) Kameras zur Qualitäts- oder Lageprüfung der Bauteile, der zweiten Trommel (80) Kameras zur Überprüfung der Seiten der Bauteile und der dritten Trommel (90) Kameras zur Überprüfung der Unterseite der Bauteile zugeordnet sind.

5. Vorrichtung nach einem der Ansprüche 1 bis 4,
**dadurch gekennzeichnet, dass**
die Bauteile (30, 60) derart in die Aufnahmen (23, 24; 51) einsetzbar sind, dass ihre Ober- und Unterseiten(32, 33; 62, 63) senkrecht zur Umfangsrichtung der jeweiligen Trommel (20, 50) gelegen und zumindest teilweise unverdeckt sind und dass zur gleichzeitigen Überprüfung von Ober- und Unterseiten (32, 33; 62, 63) der Bauteile (30, 60) die Kameras (10 bzw. 11) nahe dem Umfang der Trommel (20, 50) derart positioniert sind, dass ihre Aufnahmerichtungen tangential zur Trommel (20, 50) verlaufen und das Objektiv (10a) der ersten Kamera (10) auf die Oberseite (32, 62) und das Objektiv (11a) der zweiten Kamera (11) auf die Unterseite des Bauteils jeweils gerichtet ist.

6. Vorrichtung nach einem der Ansprüche 1 bis 4,
**dadurch gekennzeichnet, dass**
die Bauteile in die Aufnahmen derart einsetzbar sind, dass ihre Ober- und Unterseiten senkrecht zur Umlaufrichtung der jeweiligen Trommel gelegen und zumindest teilweise unverdeckt sind und dass zur gleichzeitigen Überprüfung von Ober- und Unterseiten der Bauteile die Kamera derart positioniert ist, dass ihre Aufnahmerichtung tangential zur Trommel verläuft und dem Objektiv der Kamera gegenüberliegend ein Umlenkspiegel vorgesehen ist, mit welchem das Bild der rückwärtigen Seiten der Bauteile in das Objektiv der Kamera gespiegelt wird.

7. Vorrichtung nach einem der Ansprüche 1 bis 6,
**dadurch gekennzeichnet, dass**
die Bauteile (30, 60, 65) innerhalb der Aufnahmen (23, 24, 21, 82, 82', 92, 92') an wenigstens einer Aufnahmewand (83, 84; 93, 94) entgegen Umlaufrichtung der Trommel (20, 70, 80, 90) anliegen.

8. Vorrichtung nach Anspruch 7,
**dadurch gekennzeichnet, dass**
die Bauteile (60, 65) in den Aufnahmen (52, 82, 82', 92, 92') durch Unterdruck gehalten werden.

9. Vorrichtung nach einem der Ansprüche 1 bis 8,
**dadurch gekennzeichnet, dass**
zur Beschickung der Trommel (20, 50) ein in Tangentialrichtung verlaufender Zuführschacht (40) und zum Auswurf der geprüften Bauteile (30, 60) zwei oder mehrere winklig und/oder versetzt zueinander angeordnete Abführschächte (41, 42) vorgesehen sind, welche alternativ dem Auswurf unterschiedlich qualifizierter Bauteile dienen.

## Claims

1. Apparatus for optically checking electronic components, in particular semiconductor components, consisting of at least two revolving drums with holders arranged radially at angular spacings on their circumference, into which the components can be inserted, wherein the drums are arranged in such a way that their circumferential surfaces are closely adjacent in a transfer region and in this region in each case one component can be transferred from the component holder of one drum into the component holder of the other drum, and also consisting of at least one camera assigned to each drum, the lens of which camera is directed towards the side of the component that is to be checked, and an image-processing computer, **characterised in that** a third revolving drum (90) with component holders (92, 92') distributed at equal angular spacings around the circumference is provided in the conveying direction of the components (60, 65), and **in that** the axes (71, 81; 81, 91) of two adjacent drums (70, 80; 80, 90) are in each case perpendicular to one another.

2. Apparatus according to claim 1, **characterised in that** the holders (82, 92) of the drums (80, 90) are open at the side and are dimensioned in such a way that the components (65) partially project from the circumferential surface of the drums (80, 90), wherein, during component transfer, the component (65) is briefly placed partly in the holder (82) of one drum (80) and partly in the holder (92) of the other drum (90).

3. Apparatus according to claim 1, **characterised in that** the holders (82', 92') of the drums (80', 90') are dimensioned in such a way that the components (60) are placed entirely within the holders (82', 92'), and **in that** each holder (82') is assigned a radial pusher (85'), by means of which a component (60) can be pushed out of the holder (82') and into the corresponding holder (92') of the adjacent drum (90).

4. Apparatus according to claim 1, 2 or 3, **characterised in that** the first drum (70) in the conveying direction of the components is assigned cameras for checking the quality or position of the components, the second drum (80) is assigned cameras for checking the sides of the components, and the third drum (90) is assigned cameras for checking the underside of the components.

5. Apparatus according to one of claims 1 to 4, **characterised in that** the components (30, 60) can be inserted in the holders (23, 24; 51) in such a way that their upper sides and undersides (32, 33; 62, 63) are placed perpendicular to the circumferential direction of the respective drum (20, 50) and are at least partially uncovered, and **in that**, in order to simultaneously check upper sides and undersides (32, 33; 62, 63) of the components (30, 60), the cameras (10 and 11) are positioned close to the circumference of the drum (20, 50) in such a way that their recording directions run tangentially to the drum (20, 50) and the lens (10a) of the first camera (10) is directed towards the upper side (32, 62) and the lens (11a) of the second camera (11) is directed towards the underside of the component.

6. Apparatus according to one of claims 1 to 4, **characterised in that** the components can be inserted in the holders in such a way that their upper sides and undersides are placed perpendicular to the circumferential direction of the respective drum and are at least partially uncovered, and **in that**, in order to simultaneously check upper sides and undersides of the components, the camera is positioned in such a way that its recording direction runs tangentially to the drum and a deflection mirror is provided opposite the lens of the camera, by means of which deflection mirror the image of the rear sides of the components is reflected into the lens of the camera.

7. Apparatus according to one of claims 1 to 6, **characterised in that** the components (30, 60, 65) within the holders (23, 24, 21, 82, 82', 92, 92') bear against at least one holder wall (83, 84; 93, 94) counter to the direction of revolution of the drum (20, 70, 80, 90).

8. Apparatus according to claim 7, **characterised in that** the components (60, 65) are held in the holders (52, 82, 82', 92, 92') by a vacuum.

9. Apparatus according to one of claims 1 to 8, **characterised in that** a feed shaft (40) which runs in the tangential direction is provided for loading the drum (20, 50), and two or more discharge shafts (41, 42) arranged at an angle to and/or offset from one another are provided for discharging the checked components (30, 60), which alternatively serve for discharging differently graded components.

## Revendications

1. Dispositif de contrôle optique de composants électroniques, notamment de composants semi-conducteurs, comprenant au moins deux tambours tournant, ayant des logements répartis à leur périphérie, à des intervalles angulaires, logements recevant les composants,
les tambours étant disposés pour que leurs surfaces périphériques soient étroitement rapprochées dans une zone de transfert et, dans cette zone de transfert, chaque composant est transféré du logement à composant d'un tambour dans le logement à composant de l'autre tambour,
ainsi qu'au moins une caméra associée à chaque tambour et dont l'objectif est dirigé sur le côté à contrôler du composant, ainsi qu'un calculateur de traitement d'image,
**caractérisé en ce qu'**
un troisième tambour tournant (90) est prévu dans la direction de transport des composants (60, 65), ce tambour ayant à sa périphérie des logements à composant (92, 92') à répartition équiangulaire, et les axes (71, 81 ; 81, 91) de deux tambours voisins (70; 80 ; 80, 90) sont respectivement perpendiculaires l'un par rapport à l'autre.

2. Dispositif selon la revendication 1,
**caractérisé en ce que**
les logements (82, 92) des tambours (80, 90), sont ouverts sur le côté et sont dimensionnés pour que les composants (65) débordent partiellement de la surface périphérique des tambours (80, 90),
et pendant son transfert, le composant (65) est un court instant en partie dans le logement (82) d'un tambour (80) et en partie dans le logement (92) de l'autre tambour (90).

3. Dispositif selon la revendication 1,
**caractérisé en ce que**
les logements (82', 92') des tambours (80', 90') sont dimensionnés pour que les composants (60) se placent complètement dans les logements (82', 92'), et
à chaque logement (82') est associé un poussoir radial (85') qui pousse le composant (60) du logement (82') dans le logement (92') correspondant du tambour voisin (90).

4. Dispositif selon la revendication 1, 2 ou 3,
**caractérisé en ce que** dans la direction de transport des composants, le premier tambour (70) comporte des caméras de contrôle de qualité et de position des composants, le second tambour (80) comporte des caméras pour contrôler les côtés des composants, et le troisième tambour (90) comporte des caméras pour contrôler la face inférieure des composants.

5. Dispositif selon l'une des revendications 1 à 4,
**caractérisé en ce que**
des composants (30, 60) sont placés dans les logements (23, 24; 51) pour que leur côté supérieur et leur côté inférieur (32, 33; 62, 63) soient perpendiculaires à la direction périphérique du tambour (20, 50) respectif, et soient au moins en partie découverts, et
pour le contrôle simultané du côté supérieur et du côté inférieur (32, 33; 62, 63) des composants (30, 60), les caméras (10, 11) sont positionnées à proximité de la périphérie du tambour (20, 50) pour que leur direction de visée soit tangente au tambour (20, 50) et que l'objectif (10a) de la première caméra (10) soit dirigé vers le côté supérieur (32, 62) et l'objectif (11a) de la seconde caméra (11) soit dirigé respectivement vers le côté inférieur du composant.

6. Dispositif selon l'une des revendications 1 à 4,
**caractérisé en ce que**
les composants sont placés dans leurs logements pour que leur côté supérieur et leur côté inférieur soient perpendiculaires à la direction périphérique du tambour respectif et soient au moins en partie dégagés, et
pour le contrôle simultané du côté supérieur et du côté inférieur des composants, les caméras sont positionnées pour que leur direction de visée soit tangente au tambour et que l'objectif de la caméra soit en regard d'un miroir de renvoi qui donne l'image du côté arrière des composants dans l'objectif de la caméra.

7. Dispositif selon l'une des revendications 1 à 6,
**caractérisé en ce que**
les composants (30, 60, 65) sont appliqués dans les logements (23, 24, 21, 82, 82', 92, 92') contre au moins une paroi de logement (83, 84; 93, 94) dans la direction opposée à la direction de circulation des tambours (20, 70, 80, 90).

8. Dispositif selon la revendication 7,
**caractérisé en ce que**
les composants (60, 65) sont maintenus dans leurs logements (52, 82, 82', 92, 92') par dépression.

9. Dispositif selon l'une des revendications 1 à 8,
**caractérisé en ce qu'**
une trémie d'alimentation (40) dirigée tangentiellement au tambour, est prévue pour l'alimentation des tambours (20, 50) et pour l'éjection des composants contrôlés (30, 60), deux ou plusieurs trémies (41, 42) d'évacuation sont installées en position angulaire et/ou en position décalée les unes par rapport aux autres, ces trémies servant alternativement à l'éjection de composants de qualité différente.
